# EUROPÄISCHE PATENTSCHRIFT

(11) **EP 1 129 608 B1**
(45) Veröffentlichungstag und Bekanntmachung des Hinweises auf die Patenterteilung: **28.06.2006**
(21) Anmeldenummer: 00104193.8
(22) Anmeldetag: 01.03.2000
(51) Int. Cl.: A01C 15/00, B65D 88/66

(54) **Streuanordnung**
Spreading device
Dispositif d'épandage

(43) Veröffentlichungstag der Anmeldung: 05.09.2001
(73) Patentinhaber: Lehner Agrar GmbH, 89198 Westerstetten (DE)
(72) Erfinder: Lehner, Bernhard Helmut, 89198 Westerstetten (DE); Lehner, Manfred Anton, 89198 Westerstetten (DE)
(74) Vertreter: Weber, Gerhard

(56) Entgegenhaltungen:
- EP-A- 0 225 836
- EP-A- 0 892 255
- WO-A-00/08912
- DE-A- 3 438 970
- DE-C- 3 532 756
- FR-A- 2 177 486
- GB-A- 2 084 117
- US-A- 5 960 990
- PATENT ABSTRACTS OF JAPAN vol. 1999, no. 13, 30. November 1999 (1999-11-30) & JP 11 208770 A (DENKI KAGAKU KOGYO KK), 3. August 1999 (1999-08-03)

## Beschreibung

Die Erfindung betrifft eine Streuanordnung mit einer Streueinrichtung und einem Vorratsbehälter für Streugut.

Eine derartige Streuanordnung ist beispielsweise aus der DE 35 32 756 C1 in Form eines Schleuderstreuers für gekörnte Düngemittel bekannt. Bei der bekannten Anordnung ist ein Verbindungsarm durch eine flexible Platte in der Behälterwand hindurchgeführt und mit einem außenliegenden Ende mit einer Exzenterbuchse verbunden und an seinem in den Behälter ragenden Ende mit einem Rüttelwerk versehen, welches mehrere horizontale Rührfinger aufweist und eine Schwingbewegung in zwei horizontalen Richtungen in einer Ebene knapp oberhalb einer Ausfallöffnung im Behälterboden ausführt.

In der EP 0 892 255 A1 ist ein Behälter für Schüttgüter beschrieben, welcher zu einer Ausgangsöffnung hin zusammenführende Behälterwände aufweist und an den Behälterwänden sind Rüttler angeordnet. Bei einer aus der WO 00/08 913 A1 bekannten Behälteranordnung wirkt ein Unwuchtrüttler auf eine die Behälterwände stützende stabile Rahmenstruktur.

Der vorliegenden Erfindung liegt die Aufgabe zugrunde, eine weitere vorteilhafte Streuanordnung anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Eine erste Form einer erfindungsgemäßen Anordnung mit einer Rüttelstruktur im Vorratsbehälter vermeidet die Ausübung hoher Kräfte auf die Rüttelstruktur am Ende des Verbindungsarms und damit auf das Streugut und verfolgt vielmehr ein Prinzip der Lockerung des Streuguts durch die über dem Rüttelgenerator angeregte Schwingung des freien Endes des Verbindungsarms mit der dort angeordneten Rüttelstruktur. Der Antrieb in Form des Rüttelgenerators und der Verbindungsarm können dabei auf geringe Kraftbelastung ausgelegt werden, was wiederum geringe bewegte Massen und eine niedrige Antriebsleistung erlaubt. Der zulässige Verschiebeweg der Rüttelstruktur im Rahmen der elastischen Verformbarkeit des Verbindungsarms ist vorteilhafterweise wenigstens gleich der Anregungsamplidute des Rüttelgenerators vorzugsweise wenigstens um den Faktor 2, insbesondere wenigstens den Faktor 4 größer als die Anregungsamplitude.

Die Rüttelfrequenz des Rüttelgenerators kann dabei vorteilhafterweise hoch, insbesondere auch wesentlich höher als die Frequenz einer periodisch bewegten Streueinrichtung, beispielsweise einer rotierenden Streuscheibe gewählt werden. Die Rüttelfrequenz kann insbesondere unabhängig von der Frequenz der Streueinrichtung fest oder veränderlich sein. Die Anregungsfrequenz des Rüttelgenerators liegt vorteilhafterweise bei wenigstens 10 Hz, insbesondere wenigstens 33 Hz und bei höchstens 200 Hz, insbesondere höchstens 100 Hz und liegt vorzugsweise weit entfernt von Eigenresonanzen der angeregten schwingungsfähigen Teile, insbesondere wenigstens um den Faktor 5.

Der Rüttelgenerator kann insbesondere ein unwuchtig periodisch bewegtes Element, beispielsweise einen oszillierenden Schwinganker oder vorzugsweise ein unwuchtig rotierendes Element enthalten und ist bevorzugt elektrisch angetrieben. Auch ein hydraulischer oder pneumatischer Antrieb ist bei Versorgung aus Einrichtungen eines Trägerfahrzeugs vorteilhaft. Der Generator kann dabei in einem geschlossenen Gehäuse ohne mechanische Durchführung untergebracht sein, was vorteilhaft für den Einsatz auch bei rauhen Umgebungsbedingungen wie in der Landwirtschaft oder beim Winterdienst ist. Der Rüttelgenerator ist in diesem Fall als Ganzes beweglich. Der Rüttelgenerator kann insbesondere beweglich bezüglich des Behälters gelagert sein, vorteilhafterweise mit gummielastischer Mehrpunktlagerung in elastischen Elementen aus Gummi, Elastomer oder Materialien mit vergleichbaren Eigenschaften. Das Anregungsende des Verbindungsarms ist mit dem Gehäuse direkt oder über eine mit diesem verbundene Befestigungsplatte indirekt verbunden und folgt den Schwingbewegungen des Gehäuses. Ein Widerstand gegen die Bewegung des Verbindungsarms im Behälter durch klumpendes oder verfestigtes Streugut kann durch eine Verringerung der Bewegungsamplitude des Rüttelgenerators abgefangen werden, ohne daß Beschädigungen des Generators oder des Verbindungsarms zu befürchten sind. Der Rüttelgenerator kann an der Behälterwand gelagert sein, wodurch sich zusätzlich zur Anregung des Verbindungsarms auch eine Schwingungsanregung der Behälterwand ergeben kann.

Insbesondere bei Auftreten von verklumptem oder verfestigtem Streugut bei der Rüttelstruktur im Bereich der Ausfallöffnung im Behälterboden ist eine elastische Verformbarkeit des Verbindungsarms von Vorteil, indem die Rüttelstruktur bei stärkerem Widerstand des Streuguts sich in geringerem Umfang bewegt und eine Beschädigung der Rüttelstruktur damit zuverlässig vermieden wird. Andererseits wird die angeregte Rüttelbewegung weiter zu dem Schwingungsende des elastischen Verbindungsarms übertragen und bewirkt eine Lokkerung des verfestigten Streuguts.

Der Rüttelgenerator ist vorzugsweise außerhalb des Vorratsbehälters angeordnet und der Verbindungsarm ist vorteilhafterweise von der Rüttelstruktur an Schwingungsende im Vorratsbehälter Verlauf in einen oberen Bereich des Behälters geführt und erst dort durch die Behälterwand nach außen geführt. Die sich bei einer Durchführung des Verbindungsarms durch die Behälterwand im oberen Bereich ergebende Erstreckung des Verbindungsarms in vertikaler Richtung führt auch bei für die Übertragung der Rüttelanregung günstiger hoher Festigkeit des Verbindungsarms im Regelfall zu einer ausreichenden elastischen Verformbarkeit im vorstehend beschriebenen Sinn. Das die Rüttelstruktur tragende Schwingungsende kann als freies Ende des elastischen schwingungsfähigen Verbindungsarms auch mit größerer Amplitude schwingen als die der Bewegung des Anregungsendes. Der Rüttelgenerator regt den Verbindungsarm vorwiegend zu Querschwingungen insbesondere zu Biegeschwingungen an, welche durch das im Behälter befindliche Streugut gedämpft werden.

Eine Weiterbildung der Erfindung sieht vor, den Rüttelgenerator auf eine oder mehrere Stellen der Behälterwand wirken zu lassen und die Behälterwand dadurch in Schwingungen zu versetzen, wobei wiederum die bereits angeführten Frequenzbereiche für die Anregungsfrequenz und die Frequenzverhältnisse bezüglich von Eigenresonanzen der Behälterwand in entsprechender Weise gelten.

Hierbei wird zum einen eine Lockerung des Streuguts im Behälterinneren erreicht und zum anderen ein Verkleben im Bereich der Behälterwand vermieden und ein Nachrutschen entlang der Behälterwand nach unten begünstigt. Eine Kombination von Rüttelstrukturanregung und Behälterwandanregung kann vorteilhafterweise erreicht werden durch die Befestigung des die Rüttelstruktur bzw. den Verbindungsarm anregenden Rüttelgenerators an der Behälterwand.

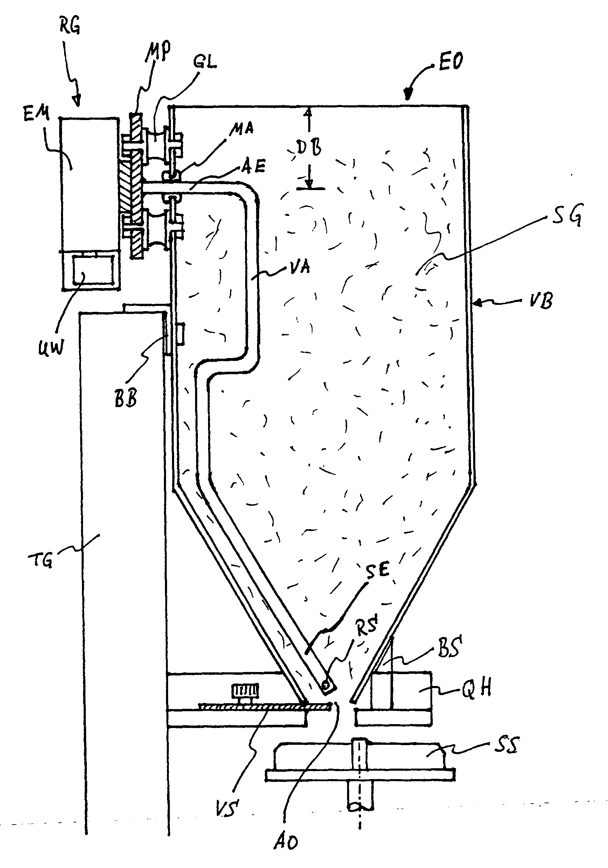

Die Erfindung ist nachfolgend anhand eines bevorzugten Ausführungsbeispiels unter Bezug auf die Abbildung noch eingehend veranschaulicht, welche eine erfindungsgemäße Streuanordnung im Querschnitt zeigt.

Die Streuanordnung umfaßt in an sich gebräuchlicher Weise einen Vorratsbehälter VB für Streugut SG, welches durch eine Ausfallöffnung AO im Behälterboden auf eine Schleuderscheibe SS fällt. Die um eine zumindest annähernd vertikale Rotationsachse rotierende Streuscheibe verteilt das Streugut flächig. Über einen verstellbaren Schieber VS kann der Öffnungsquerschnitt der Ausfallöffnung variiert werden. Der Behälter ist an der in der Abbildung linken Seitenwand über Befestigungsmittel BB an einem Traggerüst TG gehalten und über eine Stütze BS an einem Querholm QH nach unten abgestützt. Über eine durch einen nicht eingezeichneten Deckel verschließbare Einfüllöffnung EO ist Streugut von oben einfüllbar. Der Behälter besteht beispielsweise aus Kunststoff. Eine solche Streuanordnung ist an sich gebräuchlich.

Erfindungsgemäß ist im Bereich der Ausfallöffnung AO im Behälter eine Rüttelstruktur RS an einem freien Schwingungsende eines Verbindungsarms VA angeordnet, der mit seinem anderen Ende mit einem Rüttelgenerator RG verbunden ist. Der Rüttelgenerator ist seitlich außerhalb des Behälters angeordnet und der Verbindungsarm VA ist durch einen Durchbruch in der Behälterwand hindurchgeführt und dabei vorteilhafterweise von einer Manschette MA umfaßt.

Der Rüttelgenerator besteht gemäß einer skizzierten vorteilhaften Ausführungsform aus einem Motor, insbesondere einem hydraulischen oder bevorzugt einem Elektromotor EM, welcher einen um eine vorzugsweise vertikale Achse rotierbaren und bezüglich dieser Rotationsachse unwuchtigen Unwuchtkörper UW antreibt. Durch die Unwucht des rotierenden Körpers wirkt auf diesen und über die Rotationslager auf das Gehäuse des Rüttelgenerators eine Rüttelkraft bei der Frequenz der Rotation des Unwuchtkörpers. Diese liegt vorteilhafterweise in einem Bereich zwischen 33 Hz und 100 Hz. Der Unwuchtkörper kann günstigerweise direkt auf der Motorwelle des Elektromotors befestigt sein und ist vorzugsweise durch eine Gehäusekappe abgedeckt.

Die Rüttelkraft ist bestrebt, den Rüttelgenerator in eine Rüttel- oder Vibrationsbewegung zu versetzen. Um eine solche Bewegung ausführen zu können, ist der Rüttelgenerator über elastische Lager GL an der Behälterwand befestigt. Die insbesondere als Gummilager handelsüblichen elastischen Lager ermöglichen eine begrenzte Beweglichkeit des Rüttelgenerators, welche sich auf das mit dem Rüttelgenerator verbundene Anregungsende des Verbindungsarms VA überträgt. Im skizzierten Beispiel sei der Verbindungsarm an einer mit dem Gehäuse des Elektromotors verschraubten Montageplatte MP befestigt. Der Beweglichkeitsspielraum des Rüttelgenerators wird erweitert durch eine elastische Verformbarkeit der Behälterwand. Eine solche Bewegung der Behälterwand im Befestigungsbereich kann sich vorteilhafterweise in Form von Schwingungen auf die gesamte Behälterwand übertragen, deren Vibration dann ein Anhaften von Streugut verhindert. Die Bewegung des Rüttelgenerators und damit die des Anregungsendes des Verbindungsarms ist typischerweise aus verschiedenen translatorischen und Kippbewegungen zusammengesetzt. Diese übertragen sich vorwiegend als Querbewegungen auf den Verbindungsarm und auf die Rüttelstruktur. Die Rüttelstruktur am Ende des Verbindungsarms führt dann in der skizzierten Ausführung im wesentlichen Schwingbewegungen quer zur Längsrichtung des freien Endes des Verbindungsarms aus. Die Rüttelstruktur und/oder der Verbindungsarm können auch komplexere Strukturen als im skizzierten Beispiel einnehmen und insbesondere auch verzweigt sein und/oder sich in ausgedehnten, insbesondere auch gewundener Form durch den Behälter erstrecken.

Die Rüttelstruktur kann insbesondere einen oder mehrere quer zum Verbindungsarm abstehende, insbesondere horizontal ausgerichtete Fingerstrukturen aufweisen. Die Rüttelstruktur und der ggf. verzweigte Verbindungsarm verlaufen vorzugsweise überwiegend von der vertikalen Behältermittenachse über der Ausfallöffnung beabstandet.

Bei mit Streugut befülltem Vorratsbehälter ist die Bewegung des Verbindungsarms mehr oder weniger gedämpft. Die kurzhubigen Anregungsschwingungen werden aber auch bei nur geringer Beweglichkeit als Vibrationen zu der Rüttelstruktur übertragen und bewirken dort sowie entlang des Verbindungsarms eine Lockerung des Streuguts für gleichmäßigen Ausfall. Bei einer Blockierung der Rüttelstruktur RS z. B. durch verfestigtes Streugut wird durch die Elastizität des Verbindungsarms und/oder die elastische Lagerung des Rüttelgenerators eine Beschädigung der Anordnung zuverlässig vermieden und durch die bleibende Vibration des Schwingungsendes ein Lösen der Verfestigung erreicht.

Der Verbindungsarm ist von seinem Schwingungsende SE ausgehend in geringem Abstand von der Behälterinnenwand geführt und über einen Bogen in einen horizontalen Endabschnitt des Anregungsendes AE übergeleitet. Die Durchführung durch die Behälterwand ist in relativ zur gesamten Behälterhöhe geringem Abstand DB von der Behälteroberkante angeordnet.

Die vorstehend und in den Ansprüchen angegebenen sowie den Zeichnungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Streuanordnung mit einer Streueinrichtung (SS) und einem Vorratsbehälter (VB) für Streugut (SG), welcher mit einer Ausfallöffnung (AO) der Streueinrichtung zugewandt ist und im Bereich der Streuanordnung eine bewegliche Rüttelstruktur (RS) enthält, welche über einen Verbindungsarm (VA) mit an einen Rüttelgenerator (RG) gekoppelt ist, **dadurch gekennzeichnet, daß** der Verbindungsarm (VA) zwischen generatorseitigem Anregungsende (AE) und strukturseitigem Schwingungsende (SE) elastisch verformbar ist.

2. Anordnung nach Anspruch 1, **dadurch gekennzeichnet daß** die elastische Verformbarkeit des Verbindungsarms (VA) eine Verschiebung der Rüttelstruktur wenigstens im Umfang der Bewegungsamplitude des Anregungsendes zuläßt.

3. Anordnung nach Anspruch 1 oder 2, **dadurch gekennzeichnet, daß** die Verformbarkeit des Verbindungsarms (VA) überwiegend in horizontaler Richtung der Verschiebung der Rüttelstruktur (RS) gegeben ist.

4. Anordnung nach einem der Ansprüche 1 bis 3, **dadurch gekennzeichnet, daß** die Bewegungsamplitude des Anregungsendes (AE) maximal 10 mm, insbesondere max. 5 mm beträgt.

5. Anordnung nach einem der Ansprüche 1 bis 4, **dadurch gekennzeichnet, daß** die Rüttelfrequenz des Rüttelgenerators (RG) wenigstens 10 Hz, insbesondere wenigstens 33 Hz und höchstens 200 Hz insbesondere höchstens 100 Hz beträgt.

6. Anordnung nach einem der Ansprüche 1 bis 5, **dadurch gekennzeichnet, daß** der Generator ein unwuchtig periodisch bewegtes Element (UW) enthält.

7. Anordnung nach einem der Ansprüche 1 bis 5, **dadurch gekennzeichnet, daß** der Generator einen Elektromotor (EM) enthält.

8. Anordnung nach einem der Ansprüche 1 bis 7, **dadurch gekennzeichnet, daß** dem Verbindungsarm (VA) vorwiegend eine Bewegung in Form von Querschwingungen aufgeprägt ist.

9. Anordnung nach einem der Ansprüche 1 bis 8, **dadurch gekennzeichnet, daß** der Rüttelgenerator über gummielastische Puffer (GL) befestigt ist.

10. Anordnung nach einem der Ansprüche 1 bis 9, **dadurch gekennzeichnet, daß** der Verbindungsarm (VA) in einem oberen Bereich des Behälters durch die Behälterwand hindurchgeführt ist.

11. Anordnung nach einem der Ansprüche 1 bis 10, **dadurch gekennzeichnet, daß** der Verbindungsarm (VA) überwiegend, insbesondere auf wenigstens 80 % seiner Länge innerhalb des Behälters verläuft.

12. Anordnung nach einem der Ansprüche 1 bis 11, **dadurch gekennzeichnet, daß** die Rüttelstruktur (RS) eine Fingerstruktur mit wenigstens einem vorwiegend horizontal verlaufenden Finger aufweist.

13. Anordnung nach einem der Ansprüche 1 bis 12, **dadurch gekennzeichnet, daß** der Rüttelgenerator (RG) auf die Behälterwand einwirkt und diese zu Schwingungen anregt.

## Claims

1. Spreader having a spreading device (SS) and a storage hopper (VB) for spreading material (SG), which storage hopper faces the spreading device with an outlet opening (AO) and, in the region of the spreader, contains a movable shaking structure (RS) coupled by a connecting arm (VA) jointly to a shake generator (RG), **characterized in that** the connecting arm (VA) is elastically deformable between a generator-side excitation end (AE) and a structure-side vibration end (SE).

2. Spreader according to Claim 1, **characterized in that** the elastic deformability of the connecting arm (VA) permits a displacement of the shaking structure, at least in the periphery of the amplitude of movement of the excitation end.

3. Spreader according to Claim 1 or 2, **characterized in that** the deformability of the connecting arm (VA) is given predominantly in the horizontal direction of displacement of the shaking structure (RS).

4. Spreader according to one of Claims 1 to 3, **characterized in that** the amplitude of movement of the excitation end (AE) is maximally 10 mm, especially max. 5 mm.

5. Spreader according to one of Claims 1 to 4, **characterized in that** the shaking frequency of the shake generator (RG) is at least 10 Hz, especially at least 33 Hz, and no more than 200 Hz, especially no more than 100 Hz.

6. Spreader according to one of Claims 1 to 5, **characterized in that** the generator contains an element (UW) having a periodic imbalance-generated movement.

7. Spreader according to one of Claims 1 to 5, **characterized in that** the generator contains an electric motor (EM).

8. Spreader according to one of Claims 1 to 7, **characterized in that** principally a movement in the form of transverse vibrations is impressed upon the connecting arm (VA).

9. Spreader according to one of Claims 1 to 8, **characterized in that** the shake generator is fastened by means of elastomeric buffers (GL).

10. Spreader according to one of Claims 1 to 9, **characterized in that** the connecting arm (VA), in an upper region of the hopper, is led through the hopper wall.

11. Spreader according to one of Claims 1 to 10, **characterized in that** the connecting arm (VA) runs predominantly, especially over at least 80% of its length, within the hopper.

12. Spreader according to one of Claims 1 to 11, **characterized in that** the shaking structure (RS) has a finger structure having at least one predominantly horizontally running finger.

13. Spreader according to one of Claims 1 to 12, **characterized in that** the shake generator (RG) acts upon the hopper wall and excites this to vibrations.

## Revendications

1. Arrangement d'épandage comprenant un dispositif d'épandage (SS) et un réservoir (VB) de produit d'épandage (SG), lequel fait face au dispositif d'épandage avec une ouverture de précipitation (AO) et contient dans la zone de l'arrangement d'épandage une structure vibrante (RS) mobile qui est reliée à un générateur de secousses (RG) par le biais d'un bras de liaison (VA), **caractérisé en ce que** le bras de liaison (VA) est déformable par effet élastique entre l'extrémité d'excitation (AE) côté générateur et l'extrémité d'oscillation (SE) côté structure.

2. Arrangement selon la revendication 1, **caractérisé en ce que** la déformabilité élastique du bras de liaison (VA) autorise un décalage de la structure vibrante au moins de l'étendue de l'amplitude de mouvement de l'extrémité d'excitation.

3. Arrangement selon la revendication 1 ou 2, **caractérisé en ce que** la déformabilité du bras de liaison (VA) est essentiellement présente dans le sens horizontal du décalage de la structure vibrante (RS).

4. Arrangement selon l'une des revendications 1 à 3, **caractérisé en ce que** l'amplitude de mouvement de l'extrémité d'excitation (AE) est au maximum de 10 mm, notamment au maximum de 5 mm.

5. Arrangement selon l'une des revendications 1 à 4, **caractérisé en ce que** la fréquence de secousse du générateur de secousses (RG) est d'au moins 10 Hz, notamment d'au moins 33 Hz et au maximum de 200 Hz, notamment au maximum de 100 Hz.

6. Arrangement selon l'une des revendications 1 à 5, **caractérisé en ce que** le générateur comprend un élément (UW) déséquilibré déplacé de manière périodique.

7. Arrangement selon l'une des revendications 1 à 5, **caractérisé en ce que** le générateur comprend un moteur électrique (EM).

8. Arrangement selon l'une des revendications 1 à 7, **caractérisé en ce qu'**un mouvement essentiellement sous la forme d'oscillations transversales est imprimé au bras de liaison (VA).

9. Arrangement selon l'une des revendications 1 à 8, **caractérisé en ce que** le générateur de secousses est fixé par le biais de tampons élastiques en caoutchouc (GL).

10. Arrangement selon l'une des revendications 1 à 9, **caractérisé en ce que** le bras de liaison (VA) passe à travers la paroi du réservoir dans une zone supérieure du réservoir.

11. Arrangement selon l'une des revendications 1 à 10, **caractérisé en ce que** le bras de liaison (VA) s'étend essentiellement, notamment sur au moins 80 % de sa longueur, à l'intérieur du réservoir.

12. Arrangement selon l'une des revendications 1 à 11, **caractérisé en ce que** la structure vibrante (RS) présente une structure en doigt comprenant au moins un doigt qui s'étend essentiellement dans le sens horizontal.

13. Arrangement selon l'une des revendications 1 à 12, **caractérisé en ce que** le générateur de secousses (RG) agit sur la paroi du récipient et excite celle-ci pour la faire osciller.
